# EUROPÄISCHE PATENTSCHRIFT

(11) **EP 2 410 190 B1**
(45) Veröffentlichungstag und Bekanntmachung des Hinweises auf die Patenterteilung: **01.07.2015**
(21) Anmeldenummer: 11174520.4
(22) Anmeldetag: 19.07.2011
(51) Int. Cl.: F16B 7/18, F24J 2/52

(54) **Einrichtung zum Befestigen eines Gegenstands an einem eine berandete Öffnung aufweisenden Bauteil**
Device for fixing an object to a component comprising a bordered opening
Dispositif de fixation d'un objet à un élément présentant une ouverture aux bords marqués

(30) Priorität: 21.07.2010 DE 102010031874
(43) Veröffentlichungstag der Anmeldung: 25.01.2012
(73) Patentinhaber: Fath GmbH, 91174 Spalt (DE)
(72) Erfinder: Fath, Mirko Jan, 91166 Georgensgmünd (DE)
(74) Vertreter: Blaumeier, Jörg

(56) Entgegenhaltungen:
- EP-A2- 1 767 793
- DE-A1-102008 048 165
- US-A- 2 867 258

## Beschreibung

Die Erfindung betrifft eine Einrichtung zur Befestigung eines Gegenstands an einem eine berandete Öffnung aufweisenden Bauteil, insbesondere einem geschlitzten Träger oder einer T-Nut-Profilschiene, mit einem im wesentlichen U-förmigen Klemmelement mit federnden Seitenschenkeln, die in der Montagestellung die Öffnung durchgreifen, und an deren Außenseiten die Öffnungsränder der Öffnung hintergreifende Profilstrukturen vorgesehen sind, und mit einem zwischen den Seitenschenkeln bewegbar aufgenommenen Spreizelement. Eine solche Einrichtung ist z. B. aus US 2,867,258 A bekannt.

Die Befestigung eines Gegenstands an einem Bauteil kommt in unterschiedlichsten Bereichen der Technik vor. Ein Beispiel, dass jedoch die Erfindung nicht beschränkt, ist die Befestigung eines Gegenstands an einer T-Nut-Profilschiene, mittels welchen Profilschienen unterschiedlichste Konstruktionen, beispielsweise in Form von Rahmen, Gestellen, Lagerungen, Führungen etc. aufgebaut werden. An diesen Konstruktionen werden wie beschrieben häufig zusätzliche Bauteile, die unterschiedlichsten Zwecken dienen, befestigt, beispielsweise Scharniere, Rolleneinheiten, Verkleidungen oder Abdeckungen, Anschlagelemente, Klemmelemente etc, wobei diese Aufzählung nicht abschließend ist. Nahezu jeder Befestigung eines solchen Gegenstands an dem Bauteil - bei dem es sich neben der beschriebenen T-Nut-Profilschiene aber auch um einen beliebigen anderen geschlitzten Träger oder dergleichen handeln kann - ist gemein, dass die Verbindung zwischen dem Gegenstand und dem Bauteil im Bereich einer berandeten Öffnung des Bauteils, also beispielsweise der T-Nut einer solchen Profilschiene oder dem Langloch eines geschlitzten Trägers oder dergleichen erfolgt. Hierzu dient häufig eine Schrauben-Nutstein-Verbindung. In das Innere der T-Nut wird ein Nutenstein eingeführt, in den eine Befestigungsschraube, die das zu fixierende Bauteil durchsetzt oder an diesem angeordnet ist, eingeschraubt wird. Dies führt dazu, dass der Gegenstand auf die Schienenaußenseite gedrückt wird, während im Bereich des Nutinneren der Nutstein dem Bauteil gegenüberliegend an die Innenseite der T-Nut gedrückt wird. Im Falle eines Langlochs erfolgt die Befestigung beispielsweise durch eine einfache Schraube-Mutter-Verbindung.

Zwar kann insgesamt über solche Verbindungsmöglichkeiten eine sehr gute Verbindung erzielt werden, gleichwohl ist hierfür jedoch entweder der Einsatz eines speziellen Nutensteins erforderlich, häufig ergeben sich auch Positionierungs- oder Zugänglichkeitsschwierigkeiten, um entweder die Schraube in den Nutenstein oder die Mutter einzuschrauben oder an diese überhaupt vernünftig zu gelangen.

Der Erfindung liegt damit das Problem zugrunde, eine Einrichtung anzugeben, die auf einfache Weise die Befestigung eines Gegenstands an einem solchen, eine berandete Öffnung aufweisenden Bauteil ermöglicht.

Zur Lösung dieses Problems ist erfindungsgemäß eine Einrichtung der eingangs genannten Art gekennzeichnet durch eine eine Ausnehmung im mittleren Schenkel des Klemmelements durchgreifende Schraube, die in eine ein Innengewinde aufweisende Bohrung am Spreizelement einschraubbar ist, derart, dass das Spreizelement in Richtung des mittleren Schenkels und dabei ein die Seitenschenkel auseinander bewegender Spreizabschnitt zwischen die Seitenschenkel bewegbar ist.

Die Einrichtung zeichnet sich durch drei zentrale Bauteile aus, nämlich das U-förmige Klemmelement mit seinen federnden Seitenschenkeln, das zwischen diesen Seitenschenkeln bewegbar aufgenommene Spreizelement sowie eine Schraube, die das Klemmelement durchgreift und in das Spreizelement eingeschraubt werden kann. Im Rahmen der Befestigung eines solchen Gegenstands, bei dem es sich beispielsweise um ein Haltebauteil handeln kann, mit dem ein weiterer Gegenstand wie beispielsweise ein großflächiges Bauteil, z. B. ein Solarpanel, klemmend an beispielsweise einer T-Nut-Profilschiene fixiert werden soll, wird zunächst die Schraube beispielsweise durch eine Durchbrechung am Gegenstand geführt, wonach sie durch die Ausnehmung im mittleren Schenkel des Klemmelements geführt und in die Innengewindebohrung des Spreizelements eingeschraubt wird. Dies kann alles vor Ort erfolgen, kann aber, wenn es sich bei dieser Einrichtung umfassend das beschriebene Halteelement, also den Gegenstand, um eine eigenständige Baueinheit handelt, auch werkseitig erfolgen, so dass sich eine vorgefertigte Einheit ergibt. In jedem Fall wird anschließend das Klemmelement nebst Spreizelement in die berandete Öffnung des Bauteils eingeführt, so dass sich die Profilstrukturen unterhalb der Öffnungsränder befinden. Die Breite der Klemmschenkel respektive deren Abstand ist in der noch nicht verklemmten Stellung bevorzugt so zu bemessen, dass ein leicht verrastendes Einschieben in die Öffnung möglich ist, dass also die Seitenschenkelaußenseiten mit den Profilstrukturen im Wesentlichen der Öffnungsbreite entsprechen und sich so ein leichtes Einclipsen ergibt.

Nach Setzen der Einrichtung wird zur Befestigung des Gegenstands die Schraube, die am Gegenstand selbst aufgelagert ist, in die Innengewindebohrung des Spreizelements eingeschraubt, das dabei zum Gegenstand hingezogen wird, d. h., es wird in Richtung des mittleren Schenkels des Klemmelements gezogen. Hierbei greift es an den Innenseiten der Seitenschenkel an, wodurch diese aufgrund der Form des Spreizelements respektive des Spreizabschnitts, der zwischen die Seitenschenkel bewegt wird, auseinander bewegt werden, so dass die Profilstrukturen die Öffnungsränder hintergreifen. Ist die Schraube festgezogen, so ist eine extrem feste und sichere Verbindung gegeben, die Profilstrukturen hintergreifen die Öffnungsränder, eine Bewegung ist ausgeschlossen.

Die Einrichtung selbst weist folglich einen quasi axialen Aufbau auf, d. h., dass Schraube, Klemmelement und Spreizelement nebst Innengewindebohrung quasi "auf einer Linie" liegen und sich eine axiale Bewegung ergibt. Die Handhabung der Einrichtung ist sehr einfach, nachdem wie beschrieben die Schraube vor dem Einsetzen bereits leicht in die Innengewindebohrung eingeschraubt werden kann, wonach die Seitenschenkel des Klemmelements zwischen die Öffnungsränder gesetzt werden, was auch dann ohne Weiteres möglich ist, wenn die Öffnung schlecht einsehbar oder zugänglich ist. Denn die Einrichtung selbst muss lediglich quasi von oben, also vom Bereich des Schraubenkopfes, zum Anziehen der Schraube zugänglich sein, nicht aber im Bereich der Öffnung respektive des darunter liegenden Bereichs, wie dies häufig beim Setzen eines Nutensteins in einer Profilnut und Ähnlichem erforderlich ist.

Da beispielsweise bei T-Nut-Profilschienen die Breite der Nutöffnung relativ schmal ist, jedoch häufig eine relativ starke Schraube, z. B. M8x40, die aus mechanischen Gründen eingeschraubt werden und infolge dessen das Spreizelement eine entsprechende Innengewindebohrung aufweisen muss, ist es zweckmäßig, wenn die beiden Seitenschenkel im Bereich ihrer freien Enden näher aneinander liegen als im übrigen Schenkelbereich, und dass das Spreizelement einen breiten die Bohrung aufweisenden Kopf aufweist, von dem aus sich ein schmälerer Abschnitt erstreckt, der zwischen den Enden der Seitenschenkel herausragt und den Spreizabschnitt aufweist. D. h., dass sich das Klemmelement und das Spreizelement zum Ende hin quasi verjüngen, so dass der untere Endabschnitt, der zwischen die Öffnungsränder geführt wird, hinreichend schmal ist, sich darüber jedoch ein hinreichend breiter Bereich befindet, der eine entsprechende Dimensionierung der Bohrung und folglich einen Einsatz einer entsprechend dimensionierten Schraube ermöglicht.

Da je nach Anwendungsfall mitunter die Schraube relativ weit in die Innengewindebohrung einzuschrauben ist, mitunter sogar soweit, dass sie unten aus dem verbreiterten Kopf wieder austritt, sieht eine zweckmäßige Weiterbildung der Erfindung vor, den schmäleren Abschnitt des Klemmelements mittels zweier Armen, an denen jeweils ein Spreizabschnitt vorgesehen ist, zu bilden. Dies ermöglicht es, dass die Schraube aus dem Kopf am unteren Ende austritt und zwischen die beiden beabstandeten Arme greift, ohne deren Funktion zu beeinträchtigen. Gegebenenfalls besteht die Möglichkeit, auch die Innenseiten der Seitenschenkel im Bereich ihrer näher aneinander liegenden freien Enden mit einer Längsnut zu versehen, die ein Einschrauben der Schraube in diesen Bereich zulässt. Die Arme können relativ zueinander frei beweglich sein, sie können aber auch im Bereich der unteren Enden der Spreizabschnitte miteinander verbunden sein, was die Stabilität in diesem Bereich verbessert. Zur Ausbildung der Arme ist es möglich, das Spreizelement längs seiner Längsachse zu durchbohren, worüber in einem Arbeitsgang die kopfseitige Bohrung ausgebildet wird, und gleichzeitig die beiden Arme. Soll ein Verbindungssteg im Bereich der Spreizabschnittsenden stehen bleiben, enden die Durchbohrung kurz vor dem unteren Ende des Spreizelements, sollen die Arme frei beweglich sein, wird komplett durchgebohrt. Das Spreizelement ist zweckmäßigerweise von einem Strangpressprofil abgelängt und nachbearbeitet.

Eine besonders zweckmäßige Weiterbildung der Erfindung sieht insbesondere zur Ermöglichung einer Vormontage vor, am Spreizelement und an wenigstens einem Seitenschenkel lösbare Rastmittel zum Fixieren des Spreizelements in einer Vormontageposition vorzusehen. Bevorzugt sind an beiden Seitenschenkel und an beiden Seiten des Spreizelements solche Rastmittel vorgesehen, beispielsweise in Form zweier am Seitenschenkel vorgesehener Rastvorsprünge und zweier am Spreizelement vorgesehener, vorzugsweise der Form des Rastvorsprungs entsprechender Rastaufnahmen, oder umgekehrt. Dies ermöglicht es, das Spreizelement sicher in dem U-förmigen Klemmelement, das aufgrund seiner Form an seinen beiden Seiten offen ist, zu fixieren, beispielsweise von der Seite her einzuschieben und über das Rastmittel klemmenden zu fixieren, so dass es aus seiner eingeschobenen Position nicht herausrutscht. Auch ist das Einschrauben der Schraube im Rahmen der Vormontage hierüber einfacher möglich, da das Spreizelement nicht auswandern kann. Die Rastmittel, also der Rastvorsprung und die Rastaufnahme, sind dabei so ausgelegt, dass mit Festschrauben der Schraube die Verrastung zwangsläufig gelöst wird, so dass das Spreizelement angezogen werden kann. D. h., dass mit Anziehen der Schraube und damit gegebenem axialen Zug am Spreizelement automatisch der Rastvorsprung aus der Rastausnahme bewegt wird.

Ein Rastvorsprung kann beispielsweise als länglicher Raststeg, der sich vorzugsweise über die Breite eines Seitenschenkels oder des Spreizelements erstreckt, ausgeführt sein, während die Rastaufnahme als längliche Rastnut, die sich vorzugsweise über die Breite des Spreizelements oder des Seitenschenkels erstreckt, ausgeführt ist.

Wie bereits beschrieben kann ein Gegenstand, der über die Einrichtung zu befestigen ist, beispielsweise ein Halteelement sein, mit dem ein anderer Gegenstand an dem die Öffnung aufweisenden Bauteil, also beispielsweise einer T-Nut-Profilschiene oder einem geschlitzten Trägerblech oder Ähnlichem, fixiert wird. Jedoch kann gleichermaßen dieses Halteelement auch Teil der Einrichtung selbst sein, mithin also beispielsweise bereits vormontiert von der Schraube in einer entsprechenden Durchbrechung durchsetzt sein, so dass sich quasi eine Einheit bestehend aus Halteelement, Schraube, Klemmelement und Spreizelement ergibt. Mittels der das Halteelement umfassende Einrichtung wird der Gegenstand am Bauteil fixiert. D. h., dass die Einrichtung selbst ein von der Schraube durchsetztes Halteelement, an dem die Schraube gegengelagert wird, umfasst. Dieses Halteelement kann als ein L-, U- oder H-förmiges Halteblech ausgeführt sein, das einen oder zwei seitlich vorspringende Halteabschnitte aufweist, und das eine von der Schraube durchsetzte Durchbrechung aufweist. Dieses Halteblech übergreift mit dem oder den Halteabschnitten beispielsweise einen an der Profilschiene zu befestigenden flächigen Gegenstand wie beispielsweise ein Solarzellenpanel am Panelrand, wobei das Solarzellenpanel über das Halteblech nach Anziehen der Schraube infolge des randseitigen Übergriffs fest gegen die Profilschiene verspannt wird.

Das Klemmelement und das Spreizelement, gegebenenfalls auch das Haltelement, sind im Hinblick auf die aufzunehmenden Kräfte respektive Lasten bevorzugt aus Metall gefertigt, wobei sich insbesondere Aluminium anbietet.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Explosionsdarstellung einer erfindungsgemäßen Einrichtung,
- Fig. 2: die zusammengesetzte, vormontierte Einrichtung aus Fig. 1,
- Fig. 3: die Einrichtung aus Fig. 2 teilweise ein Schnitt,
- Fig. 4: ein Montagebeispiel einer Einrichtung aus Fig. 2 mit fixiertem Gegenstand,
- Fig. 5: eine Teilansicht der Konfiguration aus Fig. 4 in einer Schnittansicht mit noch nicht festgezogener Einrichtung,
- Fig. 6: eine Ansicht entsprechend Fig. 5 mit festgezogener Einrichtung, und
- Fig. 7: eine Ansicht eines Spreizelements einer zweiten Ausführungsform.

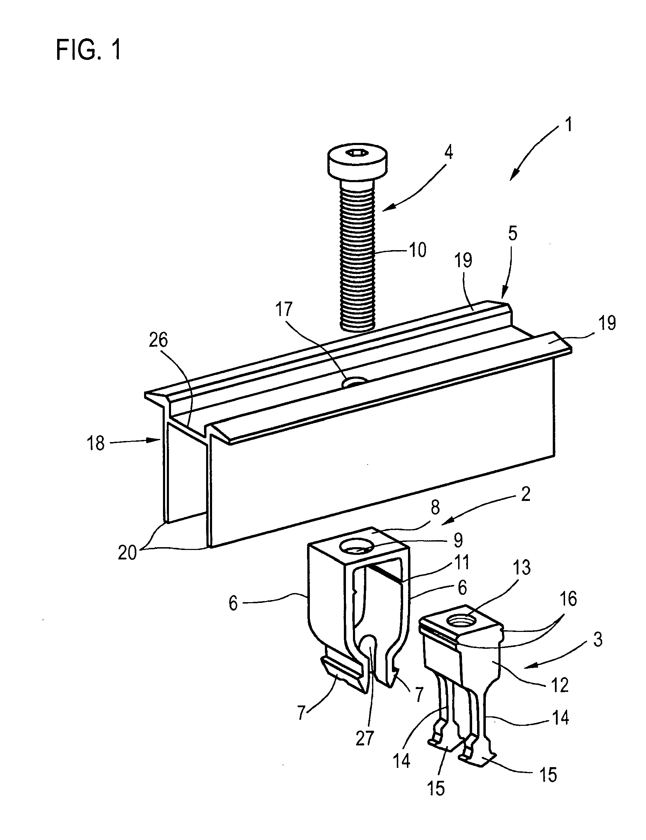

Fig. 1 zeigt eine erfindungsgemäße Einrichtung 1, umfassend ein U-förmiges Klemmelement 2, ein Spreizelement 3 sowie eine Schraube 4. Gezeigt ist hier ferner auch ein Halteelement 5, das dazu dient, einen weiteren Gegenstand an einem hier noch nicht näher gezeigtem Bauteil wie beispielsweise einem geschlitzten Träger oder eine T-Nut-Profilschiene zu befestigen. Im gezeigten Beispiel ist das Halteelement 5 als Teil der Einrichtung anzusehen, es bildet also selbst nicht den eigentlichen Befestigungsgegenstand. Gleichermaßen kann jedoch auch ein solches Halteelement, das auch beliebige andere Konfigurationen besitzt, als eigentlicher zu befestigender Gegenstand gesehen werden.

Das Klemmelement 2 weist zwei federnde Seitenschenkel 6 auf, die im Bereich ihres unteren Endes aufeinander zu laufen und an ihren Außenseiten Profilstrukturen 7 in Form von haken- oder schulterförmigen Aufweitungen aufweisen, die dazu dienen, eine später noch beschriebene berandete Öffnung im Bauteil randseitig zu hintergreifen. Am mittleren Schenkel 8 des Klemmelements 2 ist eine Ausnehmung 9 vorgesehen, die vom Gewindeschaft 10 der Schraube 4, bei der es sich beispielsweise um eine Schraube M8x40 mit Torx T40 handelt, durchsetzt wird. Ferner sind an den Innenseiten beider Seitenschenkel 6 nach innen gerichtete Rastvorsprünge 11 in Form länglicher Vorsprünge vorgesehen, die sich über die Breite jedes Seitenschenkels erstrecken. Diese wirken mit nachfolgend noch beschriebenen Rastaufnahmen am Spreizelement 3 zusammen.

Das Spreizelement 3 selbst weist einen verbreiterten Kopf 12 auf, der eine ihn durchsetzende Bohrung 13 mit einem Innengewinde aufweist, in das der Schraubenschaft 10 eingeschraubt wird. Vom verbreiterten Kopf 12 aus erstrecken sich zwei voneinander beabstandete Arme 14, an deren unteren Ende jeweils ein Spreizabschnitt 15 vorgesehen ist. Dieser Spreizabschnitt 15 dient dazu, nach Anlage an die Innenseite der einander benachbarten Enden der Seitenschenkel 6 diese auseinander zu drücken, so dass die Profilstrukturen 7 die Öffnungsränder hintergreifen.

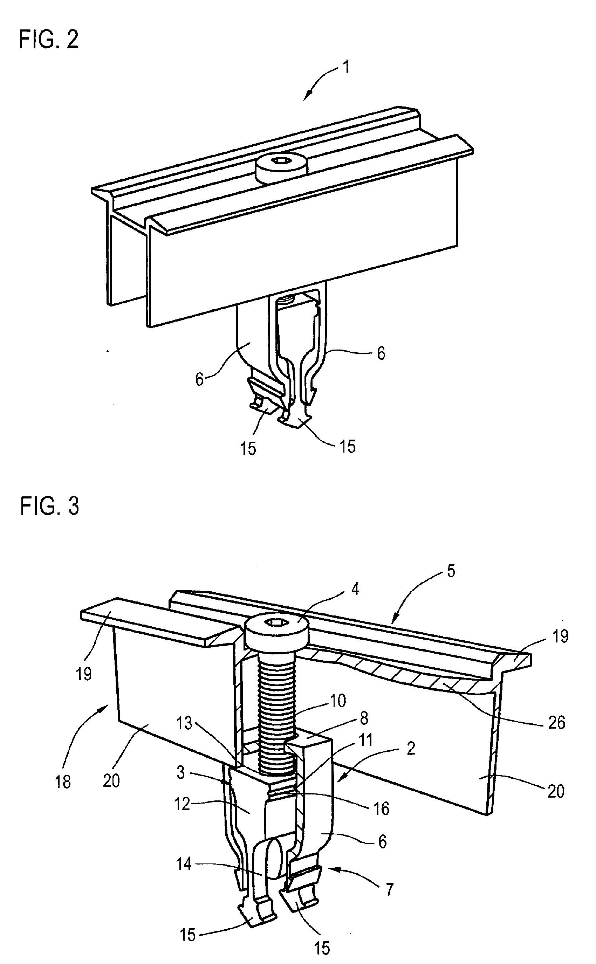

An beiden Außenseiten des Kopfes 12 sind zwei Rastaufnahmen 16 in Form länglicher Nuten vorgesehen, in die die Rastvorsprünge 11 in einer Vormontageposition, wie sie in Fig. 2 gezeigt ist, eingreifen. Hierüber wird das Spreizelement 3 leicht im Klemmelement 2 fixiert, also über die Verrastung gehaltert, so dass es nicht herausrutschen kann, bevor nicht die Schraube 4 eingeschraubt ist.

Fig. 2 zeigt wie beschrieben die Einrichtung 1 im vormontierten Zustand, Fig. 3 eine Teilschnittansicht davon. Zunächst wird die Schraube 4 durch eine Durchbrechung 17 im Halteelement 5, das hier als H-förmiges Halteblech 18 mit zwei zeitlich vorspringenden Halteabschnitten 19 ausgeführt ist, geführt. Sodann wird zwischen die beiden Schenkel 20 des Halteblechs 18 das Klemmelement 2 geschoben, so dass der Schraubenschaft 10 durch die Ausnehmung 8 greift. Zuvor wurde in das Klemmelement 2 bereits von der Seite her das Spreizelement 3 eingeschoben, so dass die Rastvorsprünge 11 in die Rastnuten 16 eingreifen. Die Schraube 4 wird mit ihrem Schraubenschaft 10 sodann in die Bohrung 13 bzw. das Innengewinde eingeschraubt. In dieser Vormontageposition liegen ersichtlich die Spreizabschnitte 15 beabstandet vom unteren Ende der federnden Schenkel 6, so dass sie also an deren Innenseite noch nicht angreifen und es folglich auch noch nicht zu einem Auseinanderspreizen kommt.

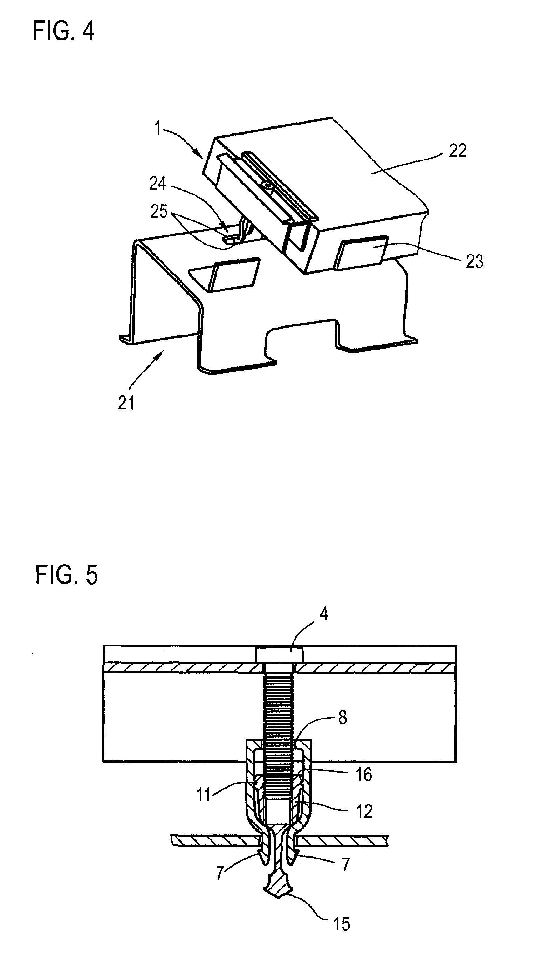

Fig. 4 zeigt exemplarisch ein Montagebeispiel der Einrichtung 1. Gezeigt ist ein Bauteil 21 hier in Form eines Trägers, an dem mittels der erfindungsgemäßen Einrichtung 1 ein großflächiger Gegenstand 22 hier in Form eines nicht näher gezeigten Solarzellenpanels befestigt wird. Der Träger 21, der im gezeigten Beispiel einen Anschlagvorsprung 23 aufweist, an den der flächige Gegenstand 22 zunächst angelegt wird, weist an seiner Oberseite eine längsgeschlitzte Öffnung 24 auf, die beidseits über zwei Ränder 25 berandet ist. Die vormontierte Einrichtung gemäß Fig. 2 wird nun zunächst mit den Spreizabschnitten 15 und den unteren Enden der Seitenschenkel 6 voraus in die Öffnung 24 eingesetzt. Der Abstand der nicht auseinandergespreizten federnden Seitenschenkel 6 ist im unteren Endbereich derart, dass er im Wesentlichen der Öffnungsbreite entspricht, so dass gegebenenfalls ein leichtes Einclipsen möglich ist. Wie Fig. 4 zeigt, übergreift dabei der eine Halteabschnitt 19 den Rand des Gegenstands 22. In dieser Stellung, die in einer Seitenschnittansicht in Fig. 5 gezeigt ist, in der aus Übersichtlichkeitsgründen der Gegenstand 22 nicht gezeigt ist, ist also nur eine lose Halterung der Einrichtung 1 in der Öffnung 24 gegeben, die Spreizelemente 15 sind von den unteren Endabschnitten mit den Profilkonturen 7 entfernt. Ersichtlich befinden sich auch noch die Rastvorsprünge 11 in den Rastaufnahmen 16, der Kopf 12 des Spreizelements 3 ist noch hinreichend weit vom mittleren Schenkel 8 des Klemmelements 2 beabstandet.

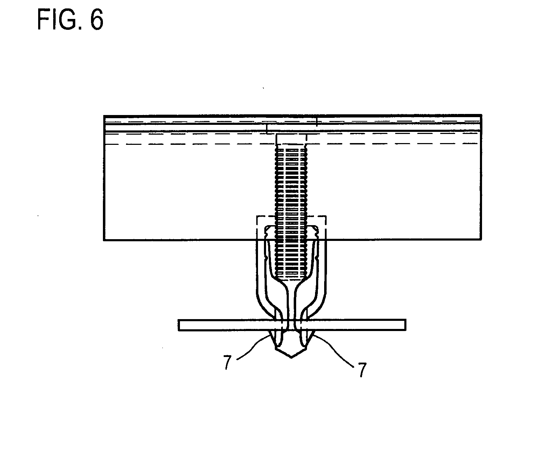

Soll nun der Gegenstand 22 fest am Träger 21 fixiert werden, so wird die Schraube 4 in den Kopf 12 eingeschraubt. Die Schraube 4 ihrerseits liegt auf dem Querschenkel 26 des Halteblechs 18 auf, ist dort also gegengelagert. Beim Festschrauben der Schraube 4 wird, sobald diese auf den Querschenkel 26 aufgelagert ist, zwangsläufig der Kopf 12 aus seiner Rasthalterung gezogen, d .h., der Kopf wird in Richtung des Querschenkels 8 gezogen, wobei infolge der axialen Zugkraft die Rastmittel gelöst werden, d. h., dass die Rastaufnahmen 16 aus ihrem Eingriff mit den Rastvorsprüngen 11 gezogen werden. Dies führt dazu, dass das Spreizelement 3 in das Klemmelement 2 hineingezogen wird, zwangsläufig werden hierzu auch die beiden Spreizabschnitte 15 zwischen die unteren Enden der Schenkel 6 gezogen. Aufgrund der sich verbreiternden Kontur der Spreizabschnitte 12 kommt es zu einem Auseinanderspreizen der Schenkel 6 derart, dass, siehe Fig. 6, die Profilkonturen 7 die Öffnungsränder 25 hintergreifen respektive die Schenkel 6 seitlich fest gegen die Öffnungsränder 25 gedrückt werden. Der Halteabschnitt 19 des Halteblechs 18 drückt nach hinreichendem Anziehen zwangsläufig fest auf den Rand des Gegenstands 22, so dass dieser fest gegen den Träger 21 gespannt wird.

Insgesamt ist also ein axialer Aufbau der Einrichtung 1 gegeben, bestehend aus Klemmelement 2, Spreizelement 3 und Schraube 4. Dies ermöglicht auch ein symmetrisches, gleichförmiges Anziehen des Spreizelements, so dass auf dieses quasi nur axial wirkende Zugkräfte ausgeübt werden, jedoch keine sonstigen Kippmomente oder dergleichen.

Da mitunter die Schraube doch relativ weit in den Kopf 12 einzuschrauben ist und je nach zu befestigendem Gegenstand nicht immer ausgeschlossen werden kann, dass die Schraube nicht durch den Kopf 12 hindurchtritt, sind die beiden beabstandeten Arme 14 vorgesehen, zwischen die der Schraubenschaft eindringen kann. Dem trägt auch Rechnung, dass die Innenseiten der einander naheliegenden Enden der Schenkel 6 jeweils rillenförmige Eintiefungen 27 aufweisen, die ein Eindringen respektive tiefes Einschrauben der Schraube 4 ermöglichen, ohne dass diese an den Seitenschenkeln 6 anliegt. Gleichwohl ist es jedoch denkbar, sollte gewährleistet sein, dass die Schraube 4 nicht soweit eingeschraubt werden muss, dass sie gegebenenfalls den Kopf unten durchdringt, anstelle zweier Arme 14 auch nur einen Arm 14 vorzusehen, der dann verbreitert ist bzw. der Breite des Kopfes entspricht. Die Bohrung 13 wäre dann letztlich lediglich als Sackloch mit Innengewinde ausgeführt.

Das Klemmelement 2 und das Spreizelement 3 sind bevorzugt aus Aluminium, entsprechendes gilt für das Halteblech 18, während es sich bei der Schraube 4 um eine Stahlschraube handelt.

Wie beschrieben kann es sich bei dem Bauteil, an dem der Gegenstand befestigt wird, um ein beliebiges Bauteil handeln, das eine irgendwie geartete berandete Öffnung aufweist. Ein alternatives Beispiel zu dem in Fig. 4 gezeigten Träger ist beispielsweise eine T-Nut-Profilschiene. Auch kann der Gegenstand, der am Bauteil befestigt wird, ein beliebiger sein. Beispielsweise kann der Gegenstand auch eine weitere T-Nut-Profilschiene sein, die mit einer Einrichtung 1 (ohne Halteelement 5) befestigt wird. Hierzu weist die Profilschiene eine der Durchbrechung 17 entsprechende Durchbrechung auf, durch die die Schraube 4 geführt wird, die an der Profilschiene selbst aufgelagert wird. Das Klemmelement 2 nebst Spreizelement 3 würde ebenfalls an der Profilschiene aufgelagert sein und an der anderen durch den randseitigen Hintergriff verspreizt werden. Es sind beliebigste Konfigurationen denkbar, die mit einer Einrichtung 1 entweder umfassend ein Haltelement 5 oder ohne ein solches Haltelement 5 an einem ebenfalls beliebig ausgeführten Bauteil befestigt werden können.

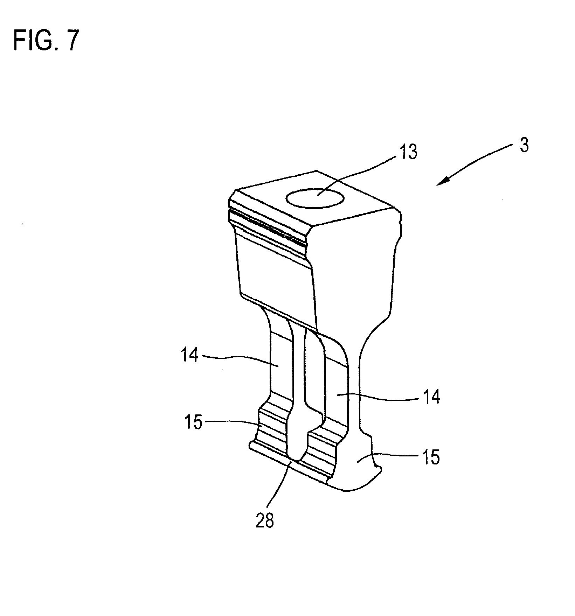

Fig. 7 zeigt ein Spreizelement 3 einer zweiten Ausführungsform, die im wesentlichen der ersten Ausführungsform entspricht, jedoch sind hier die unteren Enden der Spreizabschnitte 15 über einen schmalen Steg 28 miteinander verbunden.

Die Herstellung eines Spreizelements sowohl gemäß der ersten als auch der zweiten Ausführungsform kann z.B. dadurch erfolgen, dass - nachdem das Spreizelement von einem langen Strangpressprofil in der gewünschten Länge abgelängt wurde - mittels eines Bohrers entlang der Längsachse des Spreizelements eingebohrt wird. Hierüber wird sowohl die Bohrung 13 im Kopf ausgebildet, wie auch die beiden Arme 14 separiert werden. Soll ein Verbindungssteg 27 stehen bleiben, so endet die Durchbohrung kurz vor dem unteren Ende des Spreizelements 3, sollen beide Arme nicht verbunden sein, wird ganz durchbohrt. Alternativ ist es aber auch denkbar, die Arme in einem separaten Arbeitsgang durch Einfräsen der Ausnehmung zwischen ihnen auszubilden.

## Patentansprüche

1. Einrichtung zum Befestigen eines Gegenstands an einem eine berandete Öffnung (24) aufweisenden Bauteil (21), insbesondere einem geschlitzten Träger oder einer T-Nut-Profilschiene, mit einem im wesentlichen U-förmigen Klemmelement (2) mit federnden Seitenschenkeln (6), die in der Montagestellung die Öffnung (24) durchgreifen, und an deren Außenseiten die Öffnungsränder (25) der Öffnung (24) hintergreifende Profilstrukturen (7) vorgesehen sind, und mit einem zwischen den Seitenschenkeln (6) bewegbar aufgenommenen Spreizelement (3), **gekennzeichnet durch** eine eine Ausnehmung (9) im mittleren Schenkel (8) des Klemmelements (2) durchgreifende Schraube (4), die in eine ein Innengewinde aufweisende Bohrung (13) am Spreizelement (3) einschraubbar ist, derart, dass das Spreizelement (3) in Richtung des mittleren Schenkels (8) und dabei ein die Seitenschenkel (6) auseinander bewegender Spreizabschnitt (15) zwischen die Seitenschenkel (6) bewegbar ist.

2. Einrichtung nach Anspruch 1, **dadurch gekennzeichnet, dass** die beiden Seitenschenkel (6) im Bereich ihrer freien Enden näher aneinander liegen als im übrigen Schenkelbereich, und dass das Spreizelement (3) einen breiten die Bohrung (13) aufweisenden Kopf (12) aufweist, von dem aus sich ein schmälerer Abschnitt (14) erstreckt, der zwischen den Enden der Seitenschenkel (6) herausragt und den Spreizabschnitt (15) aufweist.

3. Einrichtung nach Anspruch 2, **dadurch gekennzeichnet, dass** der schmälere Abschnitt des Spreizelements (3) von zwei Armen (14), an denen jeweils ein Spreizabschnitt (15) vorgesehen ist, gebildet ist.

4. Einrichtung nach Anspruch 3, **dadurch gekennzeichnet, dass** die beiden Spreizabschnitte (15) im bereich ihres unteren Endes miteinander verbunden sind.

5. Einrichtung nach einem der vorangehenden Ansprüche, **dadurch gekennzeichnet, dass** am Spreizelement (3) und an wenigstens einem Seitenschenkel (6) lösbare Rastmittel zum Fixieren des Spreizelements (3) in einer Vormontageposition vorgesehen sind.

6. Einrichtung nach Anspruch 5, **dadurch gekennzeichnet, dass** an beiden Seitenschenkeln (6) und an beiden Seiten des Spreizelements (3) Rastmittel vorgesehen sind.

7. Einrichtung nach Anspruch 6, **dadurch gekennzeichnet, dass** als Rastmittel am Seitenschenkel (6) ein Rastvorsprung (11) und am Spreizelement (3) eine, vorzugsweise der Form des Rastvorsprungs (11) entsprechende, Rastaufnahme (16) vorgesehen ist, oder umgekehrt.

8. Einrichtung nach Anspruch 7, **dadurch gekennzeichnet, dass** der Rastvorsprung (11) als länglicher Raststeg, der sich vorzugsweise über die Breite eines Seitenschenkels (6) oder des Spreizelements (3) erstreckt, und die Rastaufnahme (16) als längliche Rastnut, die sich vorzugsweise über die Breits des Spreizelements (3) oder des Seitenschenkels (6) erstreckt, aufgeführt ist.

9. Einrichtung nach einem der vorangehenden Ansprüche, **dadurch gekennzeichnet, dass** sie ferner ein von der Schraube (4) durchsetztes Halteelement (5), an dem die Schraube (4) gegengelagert wird, umfasst.

10. Einrichtung nach Anspruch 9, **dadurch gekennzeichnet, dass** das Halteelement (5) ein L-, U- oder H-förmiges Halteblech (18) ist, das einen oder zwei seitlich vorspringende Halteabschnitte (19) aufweist, und das eine von der Schraube (4) durchsetzte Durchbrechung (17) aufweist.

11. Einrichtung nach einem der vorangehenden Ansprüche, **dadurch gekennzeichnet, dass** das Klemmelement (2) und das Spreizelement (3) und gegebenenfalls das Halteelement (5) aus Metall, insbesondere Aluminium sind.

## Claims

1. Device for fastening an article on a component (21) having a bordered opening (24), in particular on a slotted support or a T-groove profile rail, having an essentially U-shaped clamping element (2) with resilient side limbs (6), which engage through the opening (24) in the assembled position and on the outer sides of which are provided profile structures (7) which engage behind the peripheries (25) of the opening (24), and having an expansion element (3), which is accommodated in a moveable manner between the side limbs (6), **characterized by** a screw (4) which engages through an aperture (9) in the central limb (8) of the clamping element (2) and can be screwed into an internally threaded bore (13) on the expansion element (3) such that the expansion element (3) can be moved in the direction of the central limb (8) and, in the process, an expansion portion (15) can be moved between the side limbs (6), said expansion portion moving the side limbs (6) apart from one another.

2. Device according to Claim 1, **characterized in that** the two side limbs (6) are located more closely to one another in the region of their free ends than in the rest of the limb region, and **in that** the expansion element (3) has a broad head (12), which contains the bore (13) and from which extends a narrower portion (14), which projects between the ends of the side limbs (6) and has the expansion portion (15).

3. Device according to Claim 2, **characterized in that** the narrower portion of the expansion element (3) is formed by two arms (14), on which a respective expansion portion (15) is provided.

4. Device according to Claim 3, **characterized in that** the two expansion portions (15) are connected to one another in the region of their lower end.

5. Device according to one of the preceding claims, **characterized in that** releasable latching means are provided on the expansion element (3) and on at least one side limb (6), for the purpose of fixing the expansion element (3) in a preassembled position.

6. Device according to Claim 5, **characterized in that** latching means are provided on the two side limbs (6) and on the two sides of the expansion element (3).

7. Device according to Claim 6, **characterized in that** latching means provided are in the form of a latching protrusion (11) on the side limb (6) and of a latching mount (16), preferably corresponding to the shape of the latching protrusion (11), on the expansion element (3), or vice versa.

8. Device according to Claim 7, **characterized in that** the latching protrusion (11) is configured in the form of an elongate latching crosspiece, which extends preferably over the width of a side limb (6) or of the expansion element (3), and the latching mount (16) is configured in the form of an elongate latching groove, which extends preferably over the width of the expansion element (3) or of the side limb (6).

9. Device according to one of the preceding claims, **characterized in that** it also comprises a retaining element (5), through which the screw (4) passes and which acts as an abutment for the screw (4).

10. Device according to Claim 9, **characterized in that** the retaining element (5) is an L-shaped, U-shaped, or H-shaped retaining plate (18) which has one or two laterally projecting retaining portions (19) and which has a through-passage (17), through which the screw (4) passes.

11. Device according to one of the preceding claims, **characterized in that** the clamping element (2) and the expansion element (3), and possibly the retaining element (5), are made of metal, in particular aluminium.

## Revendications

1. Dispositif de fixation d'un objet à un élément (21) présentant une ouverture (24) aux bords marqués, en particulier à un support fendu ou à un rail profilé à rainure en T, comprenant un élément de serrage (2) essentiellement en forme de U pourvu de branches latérales élastiques (6) qui viennent en prise à travers l'ouverture (24) dans la position de montage, et sur les côtés extérieurs desquelles sont prévues des structures profilées (7) venant en prise par l'arrière avec les bords d'ouverture (25) de l'ouverture (24), et comprenant un élément d'écartement (3) reçu de manière mobile entre les branches latérales (6), **caractérisé par** une vis (4) venant en prise à travers un évidement (9) dans la branche centrale (8) de l'élément de serrage (2), laquelle vis peut être vissée dans un alésage (13), présentant un filetage intérieur, sur l'élément d'écartement (3), de telle sorte que l'élément d'écartement (3) soit mobile dans la direction de la branche centrale (8) et en l'occurrence qu'une portion d'écartement (15) écartant les branches latérales (6) l'une de l'autre soit mobile entre les branches latérales (6).

2. Dispositif selon la revendication 1, **caractérisé en ce que** les deux branches latérales (6) sont situées plus près l'une de l'autre dans la région de leurs extrémités libres que dans la région de branche restante, et **en ce que** l'élément d'écartement (3) comprend une tête large (12) comprenant l'alésage (13), à partir de laquelle tête s'étend une portion plus étroite (14) qui fait saillie entre les extrémités des branches latérales (6) et comprend la portion d'écartement (15).

3. Dispositif selon la revendication 2, **caractérisé en ce que** la portion plus étroite de l'élément d'écartement (3) est formée par deux bras (14) sur lesquels est prévue respectivement une portion d'écartement (15).

4. Dispositif selon la revendication 3, **caractérisé en ce que** les deux portions d'écartement (15) sont reliées l'une à l'autre dans la région de leur extrémité inférieure.

5. Dispositif selon l'une quelconque des revendications précédentes, **caractérisé en ce que** des moyens d'encliquetage amovibles pour fixer l'élément d'écartement (3) dans une position de pré-montage sont prévus sur l'élément d'écartement (3) et sur au moins une branche latérale (6).

6. Dispositif selon la revendication 5, **caractérisé en ce que** des moyens d'encliquetage sont prévus sur les deux branches latérales (6) et sur les deux côtés de l'élément d'écartement (3).

7. Dispositif selon la revendication 6, **caractérisé en ce qu'**en tant que moyens d'encliquetage, une saillie d'encliquetage (11) est prévue sur la branche latérale (6) et un logement d'encliquetage (16), de préférence correspondant à la forme de la saillie d'encliquetage (11), est prévu sur l'élément d'écartement (3), ou inversement.

8. Dispositif selon la revendication 7, **caractérisé en ce que** la saillie d'encliquetage (11) est réalisée sous forme de nervure d'encliquetage allongée qui s'étend de préférence sur la largeur d'une branche latérale (6) ou de l'élément d'écartement (3), et le logement d'encliquetage (16) est réalisé sous forme de rainure d'encliquetage allongée qui s'étend de préférence sur la largeur de l'élément d'écartement (3) ou de la branche latérale (6).

9. Dispositif selon l'une quelconque des revendications précédentes, **caractérisé en ce qu'**il comporte en outre un élément de retenue (5) traversé par la vis (4), et contre lequel la vis (4) s'appuie.

10. Dispositif selon la revendication 9, **caractérisé en ce que** l'élément de retenue (5) est une tôle de retenue (18) en forme de L, de U ou de H, qui comprend une ou deux portions de retenue (19) saillant latéralement, et qui comprend un passage (17) traversé par la vis (4).

11. Dispositif selon l'une quelconque des revendications précédentes, **caractérisé en ce que** l'élément de serrage (2) et l'élément d'écartement (3) et éventuellement l'élément de retenue (5) sont en métal, en particulier en aluminium.
